# EUROPEAN PATENT SPECIFICATION

(11) **EP 2 282 905 B1**
(45) Date of publication and mention of the grant of the patent: **03.09.2014**
(21) Application number: 09733768.7
(22) Date of filing: 22.04.2009
(51) Int. Cl.: B60J 10/08, B60J 10/00

(54) **A MOTOR VEHICLE DOOR SEAL**
KRAFTFAHRZEUGTÜRDICHTUNG
JOINT POUR PORTE DE VÉHICULE MOTORISÉ

(30) Priority: 23.04.2008 GB 0807375
(43) Date of publication of application: 16.02.2011
(73) Proprietor: Jaguar Land Rover Limited, Whitley Coventry CV3 4LF (GB)
(72) Inventor: MORETON-SMITH, Paul, Warwick warwickshire CV34 5TH (GB); HALLIWELL, Martin, Wheatley Oxford Oxfordshire OX33 1NW (GB)
(74) Representative: Holmes, Matthew William
(86) International application number: PCT/IB2009/051661
(87) International publication number: WO 2009/130677

(56) References cited:
- EP-A- 0 990 546
- EP-A- 1 036 910
- EP-A- 1 060 927
- DE-A1- 3 501 195
- DE-A1- 19 747 942
- DE-A1-102007 045 821
- US-A1- 2007 199 247

## Description

### Field of the Invention

The present invention relates to a seal for sealing between an aperture and a moveable closure member and in particular to a door seal for a motor vehicle.

### Background of the Invention

DE19747942, EP0990546 and US2007/0199247 each discloses a seal or seal arrangement relevant to the present invention.

Seals, and in particular, a door seal for attaching around a body door opening in an motor vehicle, must perform many functions.

Primarily such a seal must prevent the ingress of moisture, such as, rain, sleet, ice, snow and car wash water into the passenger compartment. The seal must also prevent noise such as road, engine, and wind noise from penetrating into the passenger compartment. In addition, the seal determines the quality of the fit between a vehicle door and the vehicle body, a good fit affects door closing effort and seal appearance, important elements in customer perception of vehicle quality.

To accomplish these functions effectively, a seal must not only be designed to properly interact with a weld flange to which it is typically attached and the adjacent door and body surfaces but must also be easily attached to the weld flange while being difficult to remove. Easy attachment is necessary to expedite vehicle assembly, while seal extraction effort must be high in order to provide seal retention and prevent seal disengagement during door usage.

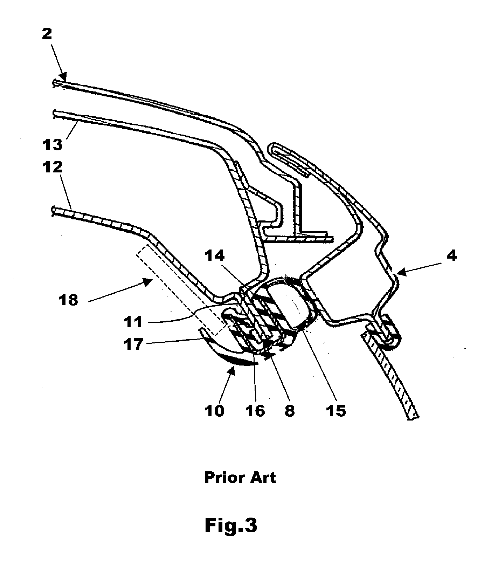

It is well known in the art to provide a seal such as that shown in Fig.3 for a vehicle door having a U-shaped portion that is reinforced with a steel core to provide a means for securing the seal to a weld flange. Such an arrangement has the disadvantages that the seal is heavy, expensive to manufacture, difficult to handle due to the generally inflexible nature of the steel reinforcing core and requires considerable force to attach the seal to the weld seal. If the steel core could be eliminated then a significant weight saving would be achieved which is advantageous in that vehicle weight directly affects fuel consumption.

The inventors have realised that if the seal is attached using adhesive tape then a steel reinforcing structure is no longer required thereby overcoming one of the disadvantages of the prior art.

One of the problems for the application of an adhesive tape mounted aperture seal is to find a consistent and reliable process for applying pressure to the tape to bond it to the mounting panel surface and a second problem is the need to accurately position the seal on the mounting panel during attachment, a possible solution is to use complex and expensive automated manufacturing equipment to locate and apply the seal.

It is therefore a first object of this invention to provide a seal that can be located and adhesively bonded to a mounting surface without the need for complex and expensive automated manufacturing equipment.

A further disadvantage with such a prior art seal of the type shown in Fig.3 is that a rubber section forming part of the seal extends to an inner side of the weld flange and is often visible from an interior of the motor vehicle. The presence of the rubber section forming the seal within the passenger compartment does not give a good impression of quality and this is particularly the case for premium vehicles.

It is a secondary object of this invention to provide a seal that has no such rubber section so as to improve the impression of quality.

### Summary of the Invention

Aspects of the invention provide a seal, a seal arrangement and a method as claimed in the appended claims.

### Description of the Drawings

The invention will now be described by way of example with reference to the accompanying drawings of which: -
Fig. 1 is a right hand side view of a motor vehicle having a door seal according to the invention;
Fig. 2 is an exploded side view of the vehicle shown in Fig.1 showing front and rear door seals prior to assembly to the vehicle;
Fig. 3 is a cross section along the line X-X on Fig.1 showing a prior art door seal;
Fig. 4 is a cross section along the line X-X on Fig.1 showing a rear door seal according to a first embodiment of the invention;
Fig. 5 is a cross section on a larger scale of the rear door seal shown in Fig.4 in an in use condition with a door in an open position;
Fig. 6 is a cross section on a larger scale of the rear door seal shown in Fig.4 in a partially assembled state with a tear bead still in place;
Fig. 7 is a cross section along the line X-X on Fig.1 showing a rear door seal according to a third embodiment of the invention;
Fig. 8 is a cross section on a larger scale of the rear door seal shown in Fig.7 in a partially assembled state with a tear bead still in place; and
Fig. 9 is a cross section on a larger scale of the rear door seal shown in Fig.7 in an in use condition with the door in an open position.

### Description of the Invention

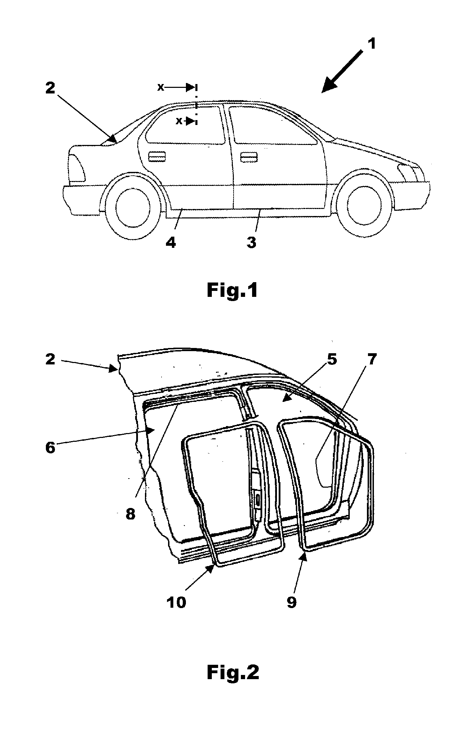

With reference to Figs.1 and 2 there is shown a motor vehicle 1 having a body structure 2 defining front and rear door apertures 5 and 6 of which only the right hand side apertures 5, 6 are shown.

The front door aperture 5 is defined by an inner peripheral edge 7 and the rear door aperture is defined by an inner peripheral edge 8. The front door aperture 5 has a seal 9 extending around it and the rear door aperture 6 has a rear door seal 10 extending around it.

Referring now to Fig.3 which shows a prior art rear door seal, the peripheral edge 8 of the rear door aperture 6 is formed by a weld flange 11 formed at the juncture of inner and outer panels 12, 13 forming part of the body structure 2 of the motor vehicle 1 sometimes known as a cantrail.

The rear door seal 10 comprises of a U-shaped base portion 14 for attachment to the flange 11 of the door aperture 6 and a tubular portion 15 extending outwardly from the U-shaped base portion 14 for contact with an inner side of the rear door 4 to form a seal therebetween. A U-shaped steel reinforcing member 16 is embedded in the U-shaped base portion 14 to provide the required gripping force to hold the rear door seal 10 on the flange 11.

A rubber section 17 forming part of the rear door seal 10 extends to an inner side of the weld flange 11 and overlies a trim panel 18 so that the rubber section 17 is visible from an interior of the motor vehicle 1.

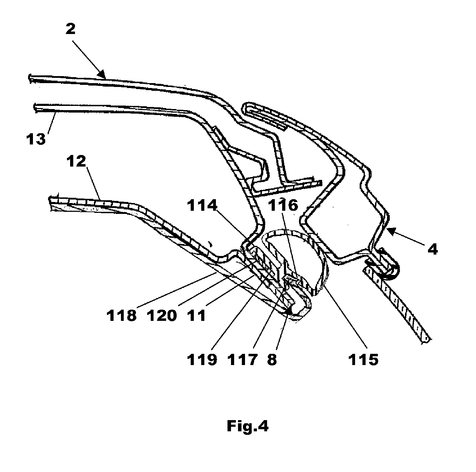

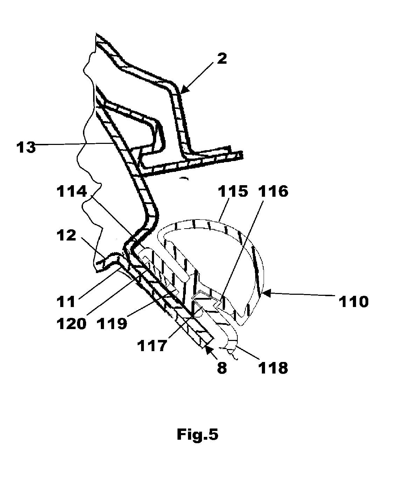

Referring now to Figs.4 to 6, which show a first embodiment of a rear door seal 110 that is intended as a direct replacement for the prior art rear door seal 10 shown in Fig.3, the peripheral edge 8 of the rear door aperture 6 is as previously described formed by a weld flange 11.

The rear door seal 110 comprises of a base portion 114 for attachment to the flange 11 of the door aperture 6 and a tubular portion 115 extending outwardly from the base portion 114 for contact with an inner side of the rear door 4 to form a seal therebetween.

A recess 116 is defined between the base portion 114 and the tubular portion 115 to accommodate a hooked end 117 of a trim member 118. The trim member 118 extends around the end of the flange 11 and is fastened by fastening means (not shown) to the inner panel 12 at a position located away from the flange 11. The trim member 118 is used to locate the rear door seal 110 on the body structure 2 as will be described in more detail below.

The door seal 110 is located entirely on an outer side of the flange 11 facing the door 4 so as to conceal the door seal 110 from view when viewed from an interior of the motor vehicle 1. The door seal 110 is fastened to the flange 11 by a double sided adhesive tape 120. The base portion 114 has a rebate or recess 119 formed therein to increase the flexibility of the base portion 114 and the adhesive tape 120 is secured in the recess 119. The increased flexibility of the base portion 114 allows the door seal 11 to flex slightly thereby accommodating irregularities in the surface of the flange 11.

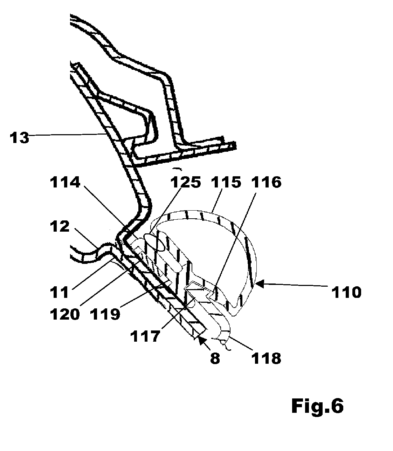

In the as manufactured state shown in Fig.6, the door seal 110 includes a removable tear strip or tear bead 125 bridging between the base portion 114 and the tubular portion 115. The tear bead 125 is substantially in register with the location of the adhesive tape 120, that is to say, the location of the tear bead 125 is such that force may be transmitted therethrough to the base portion 114 in the region where the adhesive tape 120 is bonded to the base portion 114.

During attachment of the door seal 110 to the body structure 2 or, to be more precise, to the outer side of the flange 11, the door seal 110 is pressed into firm contact with the body structure 2 by closing the door 4 so as to form a strong adhesive bond between the door seal 110 and the body structure 2. The door 4 is therefore used as a clamping mechanism and no other special or expensive clamping equipment is required nor is any location equipment required because the seal 110 is self locating.

It will be appreciated that the door 4 may remain closed for a predetermined period in order to ensure that a good bond is formed between the door seal 110 and the flange 11. Then, after attaching the door seal 110 to the body structure 2, the door is opened and the tear bead 125 is removed from the door seal 110, by pulling the tear bead from the seal.

The function of the tear bead 125 is therefore to increase temporarily the stiffness of the door seal 110 so that sufficient force can be applied to the adhesive tape 120 to bond it to the flange 11. It will be appreciated that it is desirable to use a door seal 110 having a tubular portion 115 that is relatively soft and flexible in order to ensure that the force required to urge the door 4 to its closed position remains low while enabling a good seal to be produced between the body structure 2 and the door 4. If the tubular portion 115 is made from a material with sufficient stiffness to provide the required clamping load during bonding of the adhesive tape 120 to the flange 11 then the force required to shut the door 4 would be excessive. The tear bead 125 therefore acts during assembly of the door seal 110 to the motor vehicle 1 as a relatively rigid transfer medium or path to transfer force from the door 4 to the adhesive tape 120.

It will be appreciated that the base portion 114 and the tubular portion 115 may be made from differing materials that are co-extruded to form the door seal 110. For example and without limitation, the base portion 114 may be made from a solid EPDM material and the tubular portion 115 may be made from foamed EPDM material.

The method of attaching the door seal 110 to the flange 11 comprises extruding the door seal 110 and adhesively bonding a first side of the double-sided adhesive tape 120 to the base portion 114.

Then a protective strip (not shown) is removed from a second side of the double-sided adhesive tape 120 and the recess 116 in the door seal 110 is engaged with the hooked end 117 (or location feature) of the trim member 118 attached to the body structure while maintaining the second side of the adhesive tape 120 out of contact with the flange 11.

Then, the second side of the double-side tape 120 is brought into contact with the flange 11 on the body structure 2 by rotation of the door seal 110 causing it to fully engage with the hooked end 117 of the trim member 118.

A load is then applied through the door seal 110 to the adhesive tape 120 so as to fasten the door seal 110 to the flange 11 on body structure 2 by closing the door 4 so as to trap the door seal 110 between the door 4 and the flange 11.

Finally the door 4 is opened and the tear strip 125 is removed from the door seal 110 so as to put the door seal 110 into an 'in use' state.

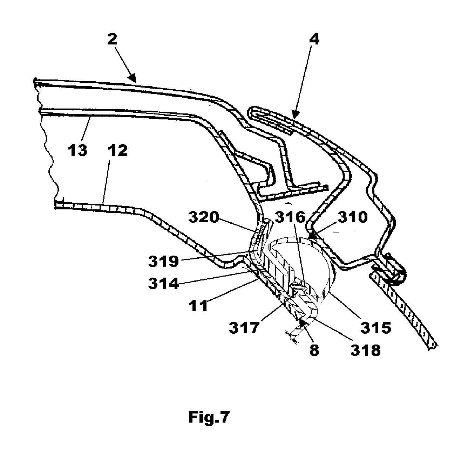

Referring now to Figs.7 to 9 there is shown a third embodiment of a door seal according to the invention.

As before, the rear door seal 310, hereinafter door seal 310, comprises of a base portion 314 for attachment to an outer panel 13 of the body structure 2 near to the door aperture 6 and a tubular portion 315 extending outwardly from the base portion 314 for contact with an inner side of the rear door 4 to form a seal therebetween.

A recess 316 is defined between the base portion 314 and the tubular portion 315 to accommodate a hooked end 317 of a trim member 318. The trim member 318 extends around the end of the flange 11 and is fastened by fastening means (not shown) to the inner panel 12 at a position located away from the flange 11. The trim member 318 is used to locate the rear door seal 310 on the body structure 2.

The door seal 310 is located entirely on an outer side of the flange 11 facing the door 4 so as to conceal the door seal 310 from view when viewed from an interior of the motor vehicle 1 and is fastened to the outer panel 13 of the body structure 2 by a double sided adhesive tape 320. The base portion 314 has a recess 319 formed therein to increase the flexibility of the base portion 314 and the adhesive tape 320 is secured in the recess 319. The increased flexibility of the base portion 314 allows the door seal 11 to flex slightly thereby accommodating irregularities in the surface of the body structure 2 to which it is fastened.

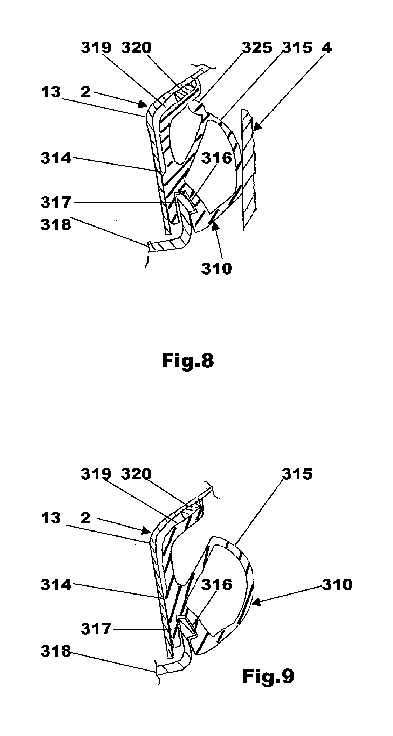

As shown in Fig.8, in the as manufactured state, the door seal 310 includes a tear bead 325 bridging between the base portion 314 and the tubular portion 315. The tear bead 325 is substantially aligned with the location of the adhesive tape 320 that is to say the location of the tear bead 325 is such that force may be transmitted therethrough to the base portion 314 in the region where the adhesive tape 320 is bonded to the base portion 314.

During attachment of the door seal 310 to the body structure 2 or, to be more precise, to an outer surface of the outer panel 13 of the body structure 2 located adjacent to the flange 11 defining the peripheral edge 8 of the door aperture 6, the door seal 310 is pressed into firm contact with the body structure 2 by closing the door 4 so as to form a strong adhesive bond between the door seal 310 and the body structure 2. The door 4 is therefore used as a clamping mechanism and no other special or expensive clamping equipment is required. It is an advantage of adhesively bonding the door seal 310 directly to the body structure 2 near to the flange 11 rather than directly to the flange 11 that there is likely to be less irregularities in the body structure 2 than there are in the flange 11 and so it is easier to obtain a good joint between the door seal 310 and the body structure 2.

As before, the door 4 may remain closed for a predetermined period in order to ensure that a good bond is formed between the door seal 310 and the flange 11 and, after attaching the door seal 310 to the body structure 2, the door 4 is opened and the tear bead 325 is removed from the door seal 310.

The function of the tear bead 325 is as before and will not be described again in detail.

As before, the base portion 314 and the tubular portion 315 may be made from differing materials that are co-extruded to form the door seal 310.

The method of attaching the door seal 310 to the body structure is the same as that previously described with respect to Figs.4 to 6 with the exception that the second side of the adhesive tape 320 is brought into contact with the outer surface of outer panel 13 in a location adjacent to the flange 11 rather than with the flange 11.

The rotation of the door seal 310 as the second side of the adhesive tape 320 is brought into contact with the outer panel 13 causes it to fully engage with the hooked end 317 of the trim member 318.

As before, a load is then applied through the door seal 310 to the adhesive tape 320 so as to fasten the door seal 310 to outer surface of the body structure 2 located adjacent to the flange 11 by closing the door 4 so as to trap the door seal 310 between the door 4 and the flange 11 and finally the door 4 is opened and the tear strip 325 is removed from the door seal 310 so as to put the door seal 310 into an in use state.

Although the invention has been described with reference to a rear door seal for a motor vehicle it will be appreciated that it is equally applicable to a front door seal of for sealing between a vehicle body structure and one of a tailgate or liftgate for a hatchback vehicle, a hinged window and a glass sunroof.

## Claims

1. A seal (110, 210, 310) for providing a seal between an aperture (5, 6) in a body structure (2) of a motor vehicle (1) and a closure member (4) used to selectively close off the aperture (5, 6), the seal (110, 210, 310) having an integrally formed base portion (114) for attachment near to a peripheral edge (11) of the aperture (5, 6) by a double sided adhesive tape (120) and a tubular portion (115) extending outwardly from the base portion (114) for contact with the closure member (4) to form a seal therebetween, wherein the seal (110, 210, 310) has a recess (116) for engagement, in use, with a location feature (117) attached to the body structure (2) and in that, when manufactured, the seal (110, 210, 310) includes a removable tear bead (125) bridging between the base portion (114) and the tubular portion (115) and located such that it is substantially in register with the adhesive tape (120).

2. A seal as claimed in claim 1, wherein the recess (116) is defined between the base portion (114) and the tubular portion (115) to accommodate in use the location feature (117).

3. A seal as claimed in claim 1 or claim 2, wherein the recess (116) has a complementary shape to the location feature (117).

4. A seal arrangement for sealing between an aperture (5,6) in a motor vehicle body structure (2) and a moveable closure member (4) used to selectively close off the aperture (5, 6), comprising a seal as claimed in any preceding claim.

5. A seal arrangement as claimed in claim 4, further comprising a trim member (118) having a location feature (117) for at least partially locating the seal (110, 210, 310) on the body structure (2).

6. A seal arrangement as claimed in claim 5, wherein the trim member (118) extends around the peripheral edge (11) of the aperture (5, 6) and the location feature (117) of the trim member (118) is, in use, engaged with a recess (116) formed in the seal (110, 210, 310).

7. A seal arrangement as claimed in any preceding claim, wherein the base portion (114) of the seal is adhesively fastened to an outer face of a flange (11) defining the peripheral edge of the aperture (5, 6).

8. A seal arrangement as claimed in any preceding claim wherein the base portion (114) of the seal is adhesively fastened to an outer surface of the body structure (2) located adjacent to a flange (11) defining the peripheral edge of the aperture (5, 6).

9. A seal or seal arrangement as claimed in any preceding claim wherein the base portion (114) has a further recess (119) formed therein to increase the flexibility of the base portion (114) and the adhesive tape (120) is secured in the recess (119).

10. A seal arrangement as claimed in claim 7 or claim 8 wherein the seal (110, 210, 310) is located entirely on an outer side of the flange (11) facing the closure member (4) so as to conceal the seal from view when viewed from an interior of the motor vehicle (1).

11. A seal arrangement as claimed in any preceding claim wherein the closure member (4) is one of a door, a tailgate for a hatchback vehicle, a hinged window and a glass sunroof.

12. A method of attaching a seal (110, 210, 310) to an aperture (5, 6) in a body structure (2) selectively closed by a closure member (4) wherein the method comprises:
extruding a seal (110, 210, 31) comprising an integrally formed base portion (114) for attachment near to a peripheral edge (11) of the aperture (5, 6), a tubular portion 115) extending outwardly from the base portion (114) for contact with the closure member (4) to form a seal therebetween and a tear bead (125) bridging between the base portion (114) and the tubular portion (115);
adhesively bonding a first side of a double-sided adhesive tape (120) to the base portion (114);
engaging the seal (110, 210, 310) with a location feature (117) attached to the body structure (2);
removing a protective strip from a second side of the double-sided adhesive tape (120);
bringing the second side of the double-side tape (120) into contact with the body structure (2);
applying a load through the seal (110, 210, 310) to the adhesive tape (120) so as to fasten the seal to the body structure (2);
removing the load; and
removing the tear bead (125) from the seal.

13. A method as claimed in claim 12, wherein applying a load through the seal (110, 210, 310) to the adhesive tape (120) so as to fasten the seal to the body structure (2) comprises closing the closure member (4) so as to trap the seal (110, 210, 310) between the closure member (4) and the body structure (2).

14. A method as claimed in claim 12 or claim 13, wherein engaging the seal (110, 210, 310) with a location feature attached to the body structure (2) comprises engaging the seal with a trim member (118) attached to the body structure (2).

15. A vehicle having a seal (110, 210, 310) or a seal arrangement as claimed in any preceding claim.

## Patentansprüche

1. Dichtung (110, 210, 310) zum Bereitstellen einer Abdichtung zwischen einer Öffnung (5, 6) in einem Karosserieaufbau (2) eines Kraftfahrzeugs (1) und einem Verschließelement (4), welches eingesetzt wird, um selektiv die Öffnung (5, 6) zu verschließen, wobei die Dichtung (110, 210, 310) einen in einem Stück geformten Basisteil (114) zum Befestigen nahe einer Außenkante (11) der Öffnung (5, 6) mit doppelseitigem Klebeband (120) und einen schlauchförmigen Teil (115) hat, der sich von dem Basisteil (114) nach außen erstreckt, um mit dem Verschließelement (4) in Kontakt zu treten und dazwischen eine Abdichtung zu schaffen, wobei die Dichtung (110, 210, 310) eine Aussparung (116) hat, in die im Gebrauch ein Einbauortsmerkmal (117), welches am Karosserieaufbau (2) befestigt ist, eingreift, und wobei die Dichtung (110, 210, 310) bei der Herstellung eine entfernbare Zugwulst (125) enthält, die den Raum zwischen dem Basisteil (114) und dem schlauchförmigen Teil (115) überbrückt und so angeordnet ist, dass sie im Wesentlichen am Klebeband (120) ausgerichtet ist.

2. Dichtung nach Anspruch 1, wobei die Aussparung (116) zwischen dem Basisteil (114) und dem schlauchförmigen Teil (115) angeordnet ist, um im Gebrauch das Einbauortsmerkmal (117) aufzunehmen.

3. Dichtung nach Anspruch 1 oder Anspruch 2, wobei die Aussparung (116) eine Form hat, die komplementär zum Einbauortsmerkmal (117) ist.

4. Dichtungsanordnung zum Abdichten zwischen einer Öffnung (5, 6) im Karosserieaufbau (2) eines Kraftfahrzeugs und einem beweglichen Verschließelement (4), welches eingesetzt wird, um selektiv die Öffnung (5, 6) zu verschließen, umfassend eine Dichtung nach einem der vorhergehenden Ansprüche.

5. Dichtungsanordnung nach Anspruch 4, ferner umfassend ein Zierleistenelement (118) mit einem Einbauortsmerkmal (117), zum wenigstens teilweise Lokalisieren der Dichtung (110, 210, 310) auf dem Karosserieaufbau (2).

6. Dichtungsanordnung nach Anspruch 5, wobei das Zierleistenelement (118) sich entlang der Außenkante (11) der Öffnung (5, 6) erstreckt, und das Einbauortsmerkmal (117) des Zierleistenelements (118) im Gebrauch in eine Aussparung (116) eingreift, die in der Dichtung (110, 210, 310) gebildet wird.

7. Dichtungsanordnung nach einem der vorherigen Ansprüche, wobei der Basisteil (114) der Dichtung mit einer Klebeverbindung an der Außenoberfläche eines Bördels (11) angebracht ist, welcher die Außenkante der Öffnung (5, 6) definiert.

8. Dichtungsanordnung nach einem der vorherigen Ansprüche, wobei der Basisteil (114) der Dichtung mit einer Klebeverbindung an einer Außenoberfläche eines Karosserieaufbaus (2) neben einem Bördel (11) angebracht ist, welcher die Außenkante der Öffnung (5, 6) definiert.

9. Dichtung oder Dichtungsanordnung nach einem der vorhergehenden Ansprüche, wobei der Basisteil (114) eine weitere Aussparung (119) hat, darin geformt, um die Flexibilität des Basisteils (114) zu steigern und wobei das Klebeband (120) in der Aussparung (119) gesichert ist.

10. Dichtungsanordnung nach Anspruch 7 oder Anspruch 8, wobei die Dichtung (110, 210, 310) gänzlich an einer Außenseite des Bördels (11) gegenüber dem Verschließelement (4) angeordnet ist, um die Dichtung vom Innenraum des Kraftfahrzeugs (1) aus unsichtbar zu gestalten.

11. Dichtungsanordnung nach einem der vorhergehenden Ansprüche, wobei das Verschließelement (4) eine Tür, eine Heckklappe für eine Fließhecklimousine, ein Klappfenster oder ein Schiebedach aus Glas ist.

12. Verfahren zum Befestigen einer Dichtung (110, 210, 310) an einer Öffnung (5, 6) in einem Karosserieaufbau (2), selektiv durch ein Verschließelement (4) verschlossen, wobei das Verfahren umfasst:
Extrudieren einer Dichtung (110, 210, 310) umfassend einen in einem Stück geformten Basisteil (114) zum Befestigen an einer Außenkante (11) der Öffnung (5, 6); einen schlauchförmigen Teil (115), der sich von dem Basisteil (114) nach außen erstreckt, um mit dem Verschließelement (4) in Kontakt zu treten und dazwischen eine Abdichtung zu schaffen und eine Zugwulst (125), die den Raum zwischen dem Basisteil (114) und dem schlauchförmigen Teil (115) überbrückt;
Herstellen einer Klebeverbindung zwischen einer ersten Seite eines doppelseitigen Klebebands (120) und dem Basisteil (114);
Verknüpfen der Dichtung (110, 210, 310) mit einem Einbauortsmerkmal (117), das am Karosserieaufbau (2) angebracht ist;
Entfernen einer Schutzfolie von einer zweiten Seite des doppelseitigen Klebebands (120);
Herstellen des Kontakts zwischen der zweiten Seite des doppelseitigen Klebebands (120) und dem Karosserieaufbau (2);
Aufbringen einer Last durch die Dichtung (110, 210, 310) auf das Klebeband (120), um die Dichtung am Karosserieaufbau (2) zu befestigen;
Entfernen der Last; und
Entfernen der Zugwulst (125) von der Dichtung.

13. Verfahren nach Anspruch 12, wobei das Aufbringen einer Last durch die Dichtung (110, 210, 310) auf das Klebeband (120), um die Dichtung am Karosserieaufbau (2) zu befestigen, das Schließen des Verschließelements (4) umfasst, um die Dichtung (110, 210, 310) zwischen dem Verschließelement (4) und dem Karosserieaufbau (2) einzuklemmen.

14. Verfahren nach Anspruch 12 oder Anspruch 13, wobei das Verknüpfen der Dichtung (110, 210, 310) mit einem Einbauortsmerkmal, welches am Karosserieaufbau (2) befestigt ist, das Verknüpfen der Dichtung mit einem Zierleistenelement (118), welches am Karosserieaufbau (2) angebracht ist, umfasst.

15. Fahrzeug mit einer Dichtung (110, 210, 310) oder einer Dichtungsanordnung nach einem der vorhergehenden Ansprüche.

## Revendications

1. Joint d'étanchéité (110, 210, 310) permettant de fournir une étanchéité entre une ouverture (5, 6) dans une structure de carrosserie (2) d'un véhicule motorisé (1) et un élément de fermeture (4) utilisé pour fermer sélectivement l'ouverture (5, 6), le joint d'étanchéité (110, 210, 310) ayant une partie de base formée solidairement (114) pour une fixation près d'un bord périphérique (11) de l'ouverture (5, 6) par un ruban adhésif double face (120) et une partie tubulaire (115) s'étendant vers l'extérieur depuis la partie de base (114) pour un contact avec l'élément de fermeture (4) pour former une étanchéité entre eux, dans lequel le joint d'étanchéité (110, 210, 310) a un évidement (116) pour un enclenchement, en utilisation, avec une particularité d'emplacement (117) fixée à la structure de carrosserie (2) et dans lequel, lorsqu'il est fabriqué, le joint d'étanchéité (110, 210, 310) comprend un cordon déchirable amovible (125) formant un pont entre la partie de base (114) et la partie tubulaire (115) et situé de sorte à être sensiblement aligné avec le ruban adhésif (120).

2. Joint d'étanchéité selon la revendication 1, dans lequel l'évidement (116) est défini entre la partie de base (114) et la partie tubulaire (115) pour loger en utilisation la particularité d'emplacement (117).

3. Joint d'étanchéité selon la revendication 1 ou la revendication 2, dans lequel l'évidement (116) a une forme complémentaire à la particularité d'emplacement (117).

4. Agencement de joint d'étanchéité pour une étanchéité entre une ouverture (5, 6) dans une structure de carrosserie de véhicule motorisé (2) et un élément de fermeture mobile (4) utilisé pour fermer sélectivement l'ouverture (5, 6), comprenant un joint d'étanchéité tel que revendiqué dans l'une quelconque des revendications précédentes.

5. Agencement de joint d'étanchéité selon la revendication 4, comprenant en outre un élément de garniture (118) ayant une particularité d'emplacement (117) permettant au moins partiellement de placer le joint d'étanchéité (110, 210, 310) sur la structure de carrosserie (2).

6. Agencement de joint d'étanchéité selon la revendication 5, dans lequel l'élément de garniture (118) s'étend autour du bord périphérique (11) de l'ouverture (5, 6) et la particularité d'emplacement (117) de l'élément de garniture (118) est, en utilisation, enclenchée avec un évidement (116) formé dans le joint d'étanchéité (110, 210, 310).

7. Agencement de joint d'étanchéité selon l'une quelconque des revendications précédentes, dans lequel la partie de base (114) du joint d'étanchéité est attachée de manière adhésive sur une face externe d'une bride (11) définissant le bord périphérique de l'ouverture (5, 6).

8. Agencement de joint d'étanchéité selon l'une quelconque des revendications précédentes, dans lequel la partie de base (114) du joint d'étanchéité est attachée de manière adhésive à une surface externe de la structure de carrosserie (2) située adjacente à une bride (11) définissant le bord périphérique de l'ouverture (5, 6).

9. Joint d'étanchéité ou agencement de joint d'étanchéité selon l'une quelconque des revendications précédentes, dans lequel la partie de base (114) a un évidement supplémentaire (119) formé dans celle-ci pour augmenter la flexibilité de la partie de base (114) et le ruban adhésif (120) est fixé dans l'évidement (119).

10. Agencement de joint d'étanchéité selon la revendication 7 ou la revendication 8, dans lequel le joint d'étanchéité (110, 210, 310) est placé entièrement sur un côté externe de la bride (11) en regard de l'élément de fermeture (4) de façon à dissimuler le joint d'étanchéité de la vue lorsqu'il est vu depuis un intérieur du véhicule motorisé (1).

11. Agencement de joint d'étanchéité selon l'une quelconque des revendications précédentes, dans lequel l'élément de fermeture (4) est l'un parmi une porte, un hayon pour un véhicule à hayon, une vitre à charnière et un toit ouvrant en verre.

12. Procédé de fixation d'un joint d'étanchéité (110, 210, 310) à une ouverture (5, 6) dans une structure de carrosserie (2) fermée sélectivement par un élément de fermeture (4), dans lequel le procédé comprend :
l'extrusion d'un joint d'étanchéité (110, 210, 310) comprenant une partie de base formée solidairement (114) pour une fixation près d'un bord périphérique (11) de l'ouverture (5, 6), une partie tubulaire (115) s'étendant vers l'extérieur depuis la partie de base (114) pour un contact avec l'élément de fermeture (4) pour former une étanchéité entre eux et un cordon déchirable (125) formant un pont entre la partie de base (114) et la partie tubulaire (115) ;
la liaison adhésive d'un premier côté d'un ruban adhésif double face (120) à la partie de base (114) ;
l'enclenchement du joint d'étanchéité (110, 210, 310) avec une particularité d'emplacement (117) fixée à la structure de carrosserie (2) ;
l'enlèvement d'une bande protectrice d'un second côté du ruban adhésif double face (120) ;
la mise en contact du second côté du ruban double-face (120) avec la structure de carrosserie (2) ;
l'application d'une charge à travers le joint d'étanchéité (110, 210, 310) sur le ruban adhésif (120) de façon à attacher le joint d'étanchéité à la structure de carrosserie (2) ;
l'enlèvement de la charge ; et
l'enlèvement du cordon déchirable (125) du joint d'étanchéité.

13. Procédé selon la revendication 12, dans lequel l'application d'une charge par l'intermédiaire du joint d'étanchéité (110, 210, 310) sur le ruban adhésif (120) de façon à attacher le joint d'étanchéité à la structure de carrosserie (2) comprend la fermeture de l'élément de fermeture (4) de façon à bloquer le joint d'étanchéité (110, 210, 310) entre l'élément de fermeture (4) et la structure de carrosserie (2).

14. Procédé selon la revendication 12 ou la revendication 13, dans lequel l'enclenchement du joint d'étanchéité (110, 210, 310) avec une particularité d'emplacement fixée à la structure de carrosserie (2) comprend l'enclenchement du joint d'étanchéité avec un élément de garniture (118) fixé à la structure de carrosserie (2).

15. Véhicule ayant un joint d'étanchéité (110, 210, 310) ou un agencement de joint d'étanchéité tel que revendiqué dans l'une quelconque des revendications précédentes.
